# EUROPEAN PATENT SPECIFICATION

(11) **EP 1 905 297 B1**
(45) Date of publication and mention of the grant of the patent: **17.12.2014**
(21) Application number: 07075797.6
(22) Date of filing: 13.09.2007
(51) Int. Cl.: A01J 7/02

(54) **Method and implement for milking a dairy animal**
Verfahren und Anlage zum Melken eines Milchtieres
Méthode et installation pour traire un animal laitier

(30) Priority: 26.09.2006 NL 1032570
(43) Date of publication of application: 02.04.2008
(73) Proprietor: Maasland N.V., 3147 PA Maassluis (NL)
(72) Inventor: Fransen, Renatus Ignatius Josephus, 3135 ZD Vlaardingen (NL); Mostert, Gerard, 3181 WV Rozenburg (NL)
(74) Representative: Corten, Maurice Jean F.M.

(56) References cited:
- EP-A1- 1 138 192
- EP-A1- 1 169 912
- WO-A-97/18701

## Description

The invention relates to a method of milking a dairy animal and cleaning at least a part of a milking implement for milking the dairy animal according to the preamble of claim 1.

Such a method is known from NL 1015525C.

This document discloses a method by means of which the teat cups can be cleaned easily after each milking turn of an animal. The teat cups are attached in a customary manner to rinsing elements, by means of which a rinsing liquid is led into (and, if desired, also over the brim of) the teat cups and through the associated foremilk reservoirs. In the same manner a drying air is pressed through the teat cups and is discharged via the foremilk reservoirs. Although, in practice, this manner of cleaning meets the usual cleaning requirements, the amount of residual liquid remaining in this part of the milking implement after cleaning could be reduced.

It is an object of the invention to provide a method of milking a dairy animal and of cleaning at least a part of a milking implement, which is aimed at an improved minimisation of the amount of residual liquid after a cleaning.

For this purpose, the method mentioned in the preamble comprises the features of the characterizing part of claim 1. The invention is based inter alia on the insight that, in the case of interconnected foremilk storage volume discharge lines of the foremilk reservoirs of the individual teat cups, a rinsing element that is not perfectly attached to one of the teat cups leads, during cleaning, to a relatively lower pressure in this teat cup, the associated foremilk reservoir and the foremilk storage volume discharge line, with respect to the pressures in the teat cups, the associated foremilk reservoirs and foremilk storage volume discharge lines belonging to other teat cups. Rinsing liquid led through the foremilk storage volume discharge lines belonging to other teat cups now moves to into the foremilk storage volume discharge line with this lowest pressure, against the desired direction of flow of the rinsing liquid in this foremilk storage volume discharge line. This direction of displacement of the rinsing liquid causes an undesired resistance against a proper removal of residual liquid. The expectation that vacuum sucking of the foremilk storage volume discharge lines during cleaning obviates the aforementioned drawback and thus leads to an improved minimisation of the amount of residual liquid after the cleaning, is confirmed by practical research. The term fluid in the characterizing part of claim 1 should be interpreted widely: it comprises inter alia foremilk, foremilk residues, cleaning liquid, cleaning air or combinations thereof.

In one embodiment of a method according to the invention, the step of withdrawing fluid is a step of withdrawing at any rate at least substantially a liquid. In particular, the liquid comprises foremilk and/or cleaning liquid. Displacing foremilk from a foremilk storage volume by means of a vacuum falls within the scope of the invention. By vacuum in a space, such as a foremilk storage volume, is meant in this context any pressure lower than that of an environment that may be brought into connection with that space, so that between that space and that environment there may be created a pressure difference which may lead contents from the space to the environment. Of course, a specific example of a vacuum is a pressure lower than an atmospheric or ambient pressure. The foremilk storage volume may form part of a foremilk reservoir in which the foremilk storage volume is closable. However, it is also conceivable, of course, to achieve the foremilk storage volume in a partially open milk line configuration or similarly created foremilk storage volumes. By displacing the foremilk by means of a vacuum the foremilk is conveyed in a clean, hygienic manner to a desired position.

In one embodiment of a method according to the invention, the method comprises the step of leading cleaning fluid through the foremilk storage volume. In this case, the cleaning fluid is led through the foremilk storage volume to out of the foremilk storage volume. In an automated milking implement, a control unit will determine, on the basis of relevant parameter values, the way(s) of performing the step of leading cleaning fluid through the foremilk storage volume. The parameters may be, in the widest sense, cow-dependent and environment-dependent, and be generated by the control unit or be inputted manually into the control unit. The control unit may comprise a computer. A milk level sensor, a milk conductivity sensor, an optical or an acoustic sensor are only a few conceivable examples of sensors for obtaining the parameter values needed for the control unit.

In one embodiment of a method according to the invention, the cleaning fluid comprises a liquid, a liquid-gas mixture or gas. The term cleaning fluid comprises both cleaning fluid and disinfecting fluid. A part of a milking implement may be cleaned in the first instance by leading through a liquid, such as cold or hot water, or a liquid-gas mixture, followed, if desired, by emptying the system by blowing with the aid of compressed air. Substances may be added to the water in order to obtain an alkaline or acid solution. Steam is a suitable disinfecting fluid to be applied. The temperature and the flowing through time of the cleaning means (and, as indicated, also of the disinfecting means) are adjustable.

In one embodiment of a method according to the invention, the step of displacing fluid from the foremilk storage volume by means of a vacuum and the step of leading cleaning fluid through the foremilk storage volume are performed at least virtually simultaneously. It is found from practical research that optimum results are thus obtained.

In one embodiment of a method according to the invention, the step of displacing fluid from the foremilk storage volume by means of a vacuum continues during a time span after the step of leading cleaning fluid through the foremilk storage volume has been ended. Withdrawing fluid after cleaning fluid has been led through increases the reduction of the amount of residual liquid.

In one embodiment of a method according to the invention, the step of leading cleaning fluid through the foremilk storage volume may be divided into the following successive sub-steps: the step of leading a liquid or a liquid-gas mixture through the foremilk storage volume, and the step of leading a gas through the foremilk storage volume. The cleaning fluid comprises in principle all kinds of gas and mixtures of gases suitable for this purpose. By leading through a gas or gas mixture a first reduction of the amount of residual liquid takes place.

In one embodiment of a method according to the invention, the step of collecting at any rate at least an amount of the withdrawn foremilk in the foremilk storage volume is a step of at least substantially collecting all the withdrawn foremilk. This is the object aimed at. It is possible, of course, to use measuring means to determine the transition between foremilk and non-foremilk in a more detailed manner in order to optimise the collection of all the foremilk in the foremilk reservoir. The collection per se may be performed in an active or passive manner.

In one embodiment of a method according to the invention, the step of at least substantially collecting all the withdrawn foremilk comprises the step of at any rate at least liquid-tightly separating the connection or at any rate at least a part of the connection between the at least one teat and the foremilk storage volume from one or a plurality of further connections or at any rate at least a part of a further connection or at any rate at least parts of a plurality of further connections of the foremilk storage volume with the milking implement. In this context, the presence of a milk line valve that is provided, viewed in the direction of flow of the fluid, after the foremilk storage volume, may be taken into consideration. Closing the milk line valve means securely closing the part of the milking implement beyond the milk line valve. This security is necessary in devices for food conveyance; at this position in the milk line it is not sufficient to use flow inhibiting elements that could, in principle, offer cleaning fluids the possibility of roaming about in the milking implement.

The invention also relates to a milking implement for milking a dairy animal, comprising at least one teat cup; a foremilk storage volume that is designed to contain an amount of fluid, such as foremilk or a cleaning fluid, in which the foremilk is that milk that has been substantially withdrawn during a time span after the withdrawal of milk by milking has started, a connection between the at least one teat cup and the foremilk storage volume, and a vacuum source, in which the foremilk storage volume is connectable to the vacuum source in order to displace fluid from the foremilk storage volume by means of a vacuum. In this context, the teat cup may be a separate foremilk cup that is used in the milking implement in order to withdraw foremilk separately. The foremilk storage volume is in particular connected to the vacuum source in order to displace fluid from the foremilk storage volume by means of a vacuum. This milking implement is suitable for performing the methods according to the invention.

In one embodiment of an implement according to the invention, the connection or at any rate at least a part of the connection of the at least one teat cup with the foremilk storage volume is capable of being separated by means of a milk line valve at any rate at least liquid-tightly from one or a plurality of further connections or at any rate at least a part of a further connection or at any rate at least parts of a plurality of further connections of the foremilk storage volume with the milking implement. There is thus obtained a short cleaning path comprising at least one teat cup, a foremilk storage volume and a connection between the at least one teat cup and the foremilk storage volume. As a result thereof, a simple, quick interim cleaning of this part of the milking implement is possible.

In one embodiment of an implement according to the invention, the milking implement comprises a control unit that is designed to control the milk line valve. In an automated milking implement, there is provided a control unit for controlling various means of the implement. Sensors may provide the control unit with information on the basis of which suitable control signals are generated for controlling the milk line valve. The control unit may comprise a computer. The control unit is capable of controlling the valves present in the implement.

In one embodiment of an implement according to the invention, in which the milking implement comprises a plurality of foremilk storage volumes, the milking implement comprises a connection for discharging fluid, such as foremilk and/or a cleaning fluid, which connection is connected to the plurality of foremilk storage volumes. The connection is connected directly or indirectly to a vacuum source. The foremilk (milk) and/or cleaning liquid collected after a milking turn and cleaning may be discharged directly to the sewer. In particular, the connection debouches into a collecting element. The connection is now connected to a vacuum source via the collecting element. The foremilk (milk) and/or cleaning liquid collected in this collecting element after one or more milking turns, if the cleaning liquid does not contain chemical components that are harmful to the animals, may now be conveyed to a device for supplying feed and/or drink to an animal.

In one embodiment of a milking implement according to the invention, the implement comprises a milking robot for automatically attaching and detaching, respectively, the teat cups to and from, respectively, the teats of an animal to be milked. The described methods are excellently suitable for application in an automated milking implement.

The invention will now be explained in further detail with reference to an embodiment shown in the drawing, in which:

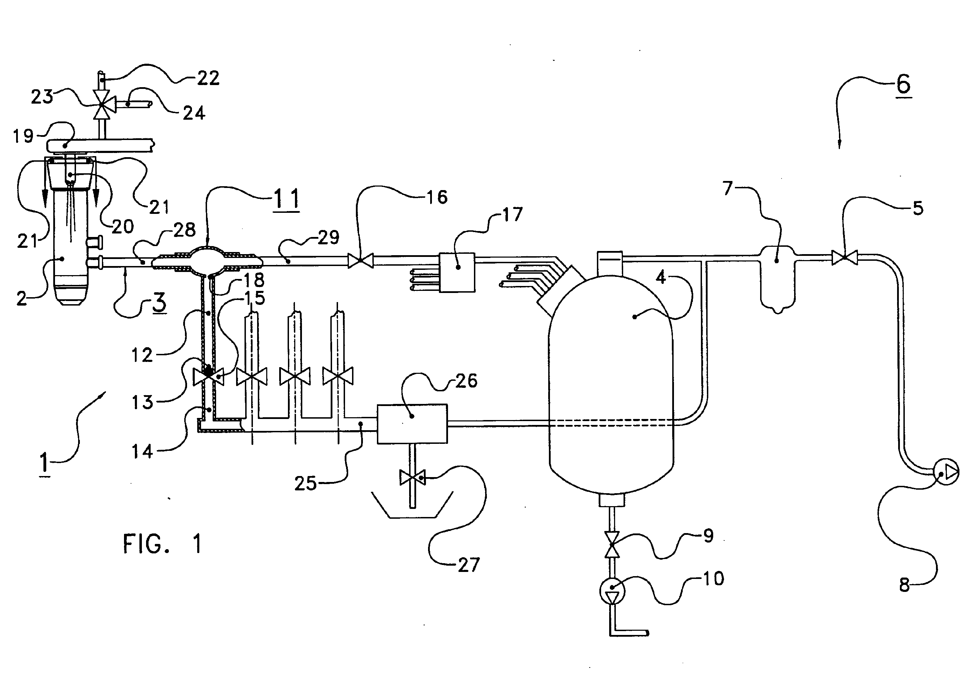

Figure 1 is a schematic view of a milking implement that is suitable for milking a dairy animal and cleaning at least a part of a milking implement.

Figure 1 is a schematic view of a milking implement 1 that is suitable for milking a dairy animal and cleaning at least a part of a milking implement. For the sake of clarity, in Figure 1 the inventive idea is shown only by means of one teat cup 2 of the milking implement 1. Like the other teat cups, said teat cup 2 is connected to a milk collecting means 4 via a milk line 3. In each of the milk lines 3 there is included a foremilk reservoir 11. The foremilk reservoir 11 may be an integrated element in a milk line 3. In the exemplary embodiment, the milk line 3 should be considered as subdivided into a connection 28 between the at least one teat cup 2 and the associated foremilk storage volume 12 and a further connection 29 of the foremilk storage volume 12 with, in this case, the milk collecting means 4 of the milking implement. In this embodiment, the milk collecting means 4 is a milk glass. Into said milk glass 4 debouch the four milk lines 3 coming from the teat cups 2, while, in the chosen embodiment, the milk glass 4 is further connected via a controllable valve 5 to the vacuum system 6 of the milking implement 1. This vacuum system 6 comprises inter alia a vacuum pump 8 and a cyclone separator 7. The vacuum pump 8 acts as a vacuum source for the milking implement 1 and the cyclone separator 7 serves for separating liquid, necessary for preventing liquid from getting into the pump 8. The controllable valve 5 may also be omitted; in that case, the vacuum pump 8 is put into operation directly. Via a valve 9 and by means of a pump 10, the milk is discharged from the milk glass 4 to a not further shown milk tank. Between a foremilk reservoir 11 and the milk collecting means 4, there is included a milk line valve 16 that is controllable by the control unit (not shown in the figure) of the milking implement 1. This means that the connection 28 of the at least one teat cup 2 with the foremilk storage volume 12 is at any rate at least liquid-tightly separable from a part of the connection 29 of the foremilk storage volume 12 with the part of the milking implement 1 that, viewed in the direction of flow of the fluid, is located after the milk line valve 16. By closing a milk line valve 16, there is obtained a very short rinsing liquid discharge line, so that the teat cup 2 and also a part of a milking implement, i.e. the connection 28 between the at least one teat cup 2 and the associated foremilk storage volume 12, and the foremilk storage volume 12 itself can be cleaned easily, and in particular after each milking turn of an animal. In the milking implement 1 there is further provided a milk analysing system 17 for analysing the milk yielded that is led through the milk lines 3.

A milking begins with the attachment of at least one teat cup 2 to a teat of the animal to be milked. This attachment may take place in an automated manner by means of a milking robot (not shown in Figure 1). Subsequently, milk is withdrawn from the animal in a known manner. The milk yielded will not directly flow to the milk collecting means 4 due to the presence of the foremilk reservoir 11. The foremilk reservoir 11 is designed to contain an amount of fluid, such as foremilk or a cleaning fluid. Preferably, all the withdrawn foremilk is collected herein. By foremilk is meant in this context the milk withdrawn during a time span after the withdrawal of milk has started. In this chosen embodiment, a foremilk storage volume 12 forms part of a foremilk reservoir 11 in which the foremilk storage volume 12 is closable. It is stressed that in relation to the inventive idea the presence of only a foremilk storage volume 12 suffices. The foremilk storage volume 12 may also relate to, for example, a milk line portion. The foremilk reservoir 11 comprises a foremilk storage volume 12, a foremilk storage volume closing means 13 and a foremilk storage volume discharge line 14 provided with a foremilk storage volume discharge line valve 15. The size of the foremilk storage volume 12 is often established in directives from the dairy industry, on the basis of which the dimensions of this element are determined. The first obtained milk will fill in the first instance the foremilk storage volume 12 of the foremilk reservoir 11. In the foremilk storage volume 12 there is a foremilk storage volume closing means 13 that closes the foremilk storage volume 12 as soon as it has been filled with the foremilk. In the present embodiment, the foremilk storage volume closing means 13 is designed as a ball. After a foremilk storage volume 12 has been filled, the ball 13 will be positioned against a seat 18, so that the foremilk storage volume 12 is closed and the subsequent milk flow will stream to the milk glass 4. It has been found in practice that the milk streaming from a teat cup 2 to the milk glass 4 does substantially not mix with the foremilk present in the lower part of a foremilk storage volume 12. By closing the milk line valves 16 present and by opening the foremilk storage volume discharge line valves 15, the temporarily stored foremilk may be released in such a way that the foremilk is displaced to out of the foremilk reservoirs 11. Foremilk from the foremilk reservoirs 11 may now be displaced to a destination by means of a vacuum.

In order to clean the teat cups and also the connections 28 between the teat cups 2 and the associated foremilk storage volumes 12, and the foremilk reservoirs 11 themselves, the milk line valves 16 located after the foremilk reservoirs 11 are closed. By properly controlling the foremilk storage volume discharge line valves 15 concerned, the associated foremilk storage volume discharge lines 14 are opened, so that the temporarily stored foremilk is displaced to out of the foremilk reservoirs 11. Cleaning liquid may now be led through the foremilk reservoirs 11 to out of the foremilk reservoirs 11. For this purpose, a cleaning holder 19 is connected to the teat cups 2. The cleaning holder 19 comprises spraying elements 20 by means of which cleaning liquid is sprayed over the brims 21 of the teat cups 2 in order to clean the outer side of the teat cups 2, while by means of the spraying elements 20 the cleaning liquid is also sprayed into the teat cups 2, the connections 28 between the teat cups 2 and the associated foremilk storage volumes 12, and the foremilk reservoirs themselves. A liquid-gas mixture is also conceivable as a cleaning fluid. The cleaning liquid is supplied to the spraying elements 20 via a line 22 that is connected to the cleaning holder 19. A connection 25 for discharging the foremilk and/or the cleaning fluid, which connection is connected to the plurality of foremilk reservoirs 11, debouches into a collecting element 26. In the chosen embodiment, the collecting element 26 is provided with a collecting element valve 27 that is controllable by the control unit. A valve autonomously switching only on the basis of the amount of fluid in the collecting element 26 is also a proper construction element at this position. When it is ensured that the rinsing liquid does not contain chemical components that are harmful to the animals, and thus only consists of water with milk residues that may be present therein, the rinsing liquid collected in the collecting element 26 may also be supplied as drinking water to the device for supplying feed and/or drink to the animals. In the other case, the rinsing liquid may be discharged to the sewer. At least virtually simultaneously with the displacement of fluid from the foremilk storage volume 12 by means of a vacuum generated by the vacuum pump 8, cleaning liquid is now led through the foremilk storage volume 12. After a particular, adjustable time span, a controllable three-way valve 23 included in the line 22 is subsequently controlled by the control unit in such a way that the line 24 is connected to the cleaning holder 19. As a result thereof a drying air is brought into the teat cups 2 and a first part of the milk lines 3 via the spraying elements 20. By means of the drying air the rinsing liquid is pressed from the teat cups 2 and the first part of the milk lines, i.e. the connections 28 between the teat cups 2 and the associated foremilk storage volumes 12, and the foremilk reservoirs 11 themselves, in such a way that the rinsing liquid can escape via the foremilk reservoirs 11. In this embodiment, leading cleaning fluid through the foremilk reservoirs 11 to out of the foremilk reservoirs 11 is thus divided into leading a cleaning liquid or a liquid-gas mixture through the foremilk reservoirs 11 to out of the foremilk reservoirs 11, followed by leading a gas through the foremilk reservoirs 11 to out of the foremilk reservoirs 11. After leading through the cleaning fluid through a foremilk reservoir 11 to out of the foremilk reservoir 11 has ended, the withdrawal of fluid from the foremilk reservoir 11 by means of a vacuum source still continues during a time span. It is pointed out here that it is further possible to connect the foremilk discharge line 25 connected to the foremilk reservoirs 11 directly to the cyclone separator 7. The cleaning fluid and the foremilk may now be discharged via the cyclone separator. By means of the described cleaning of the teat cups 2, the connections 28 between the teat cups 2 and the associated foremilk storage volumes 12, and the foremilk reservoirs 11 themselves, it is prevented that rinsing liquid residues remain at these places and as a result thereof get mixed with the milk at a next milking turn.

After the teat cups 2, the connections 28 between the teat cups 2 and the associated foremilk storage volumes 12, and the foremilk reservoirs 11 themselves have been cleaned, the cleaning holder 19 is removed and the valves 16 that are controllable by the control unit are opened and the teat cups 2 may be attached again to the teats of an animal to be milked.

The invention is by no means limited to the embodiment shown in Figure 1, but comprises all those embodiments falling within the scope of the accompanying claims. For the sake of completeness it is pointed out that 'teat cup' may be read as foremilk teat cup'.

All kinds of embodiments for a foremilk reservoir, deviating from the specific embodiment denoted in Figure 1 by reference numeral 11, are conceivable.

## Claims

1. Method of milking a dairy animal and cleaning at least a part of a milking implement (1) for milking the dairy animal, the milking implement (1) comprising:
- at least one teat cup (2);
- a foremilk storage volume (12) that is designed to contain an amount of fluid, such as foremilk or a cleaning fluid;
- a connection (28) between the at least one teat cup and the foremilk storage volume,
wherein the method comprises the steps of:
- attaching the at least one teat cup (2) to a teat of the dairy animal to be milked;
- at any rate at least withdrawing fluid, in particular foremilk, by means of the at least one teat cup (2);
- collecting at any rate at least an amount of the withdrawn foremilk in the foremilk storage volume (12);
- releasing the amount of foremilk in such a way that the foremilk is displaceable from the foremilk storage volume (12),
**characterized in that** the method also comprises the step of displacing fluid from the foremilk storage volume (12) by means of a vacuum.

2. Method according to claim 1, **characterized in that** the step of withdrawing fluid is a step of withdrawing at any rate at least substantially a liquid.

3. Method according to claim 2, **characterized in that** the liquid comprises foremilk and/or cleaning liquid.

4. Method according to any one of the preceding claims, **characterized in that** the method comprises the step of leading cleaning fluid through the foremilk storage volume (12).

5. Method according to claim 4, **characterized in that** the cleaning fluid comprises a liquid, a liquid-gas mixture or gas.

6. Method according to claim 4 or 5, **characterized in that** the step of displacing fluid from the foremilk storage volume by means of a vacuum and the step of leading cleaning fluid through the foremilk storage volume (12) are performed at least virtually simultaneously.

7. Method according to any one of claims 4 to 6, **characterized in that** the step of displacing fluid from the foremilk storage volume (12) by means of a vacuum continues during a time span after the step of leading cleaning fluid through the foremilk storage volume has been ended.

8. Method according to any one of the preceding claims 4 to 7, **characterized in that** the step of leading cleaning fluid through the foremilk storage volume (12) can be divided into the following successive sub-steps:
- leading a liquid or a liquid-gas mixture through the foremilk storage volume (12),
- leading a gas through the foremilk storage volume (12).

9. Method according to any one of the preceding claims, **characterized in that** the step of collecting at any rate at least an amount of the withdrawn foremilk in the foremilk storage volume (12) is a step of at least substantially collecting all the withdrawn foremilk.

10. Method according to claim 9, **characterized in that** the step of at least substantially collecting all the withdrawn foremilk comprises the step of at any rate at least liquid-tightly separating the connection or at any rate at least a part of the connection (28) between the at least one teat cup (2) and the foremilk storage volume (12) from one or a plurality of further connections or at any rate at least a part of a further connection or at any rate at least parts of a plurality of further connections (29) of the foremilk storage volume with the milking implement.

11. Milking implement (1) for milking a dairy animal, comprising
- at least one teat cup (2);
- a foremilk storage volume (12) that is designed to contain an amount of fluid, such as foremilk or a cleaning fluid;
- a connection (28) between the at least one teat cup (2) and the foremilk storage volume (12),
- a vacuum source (8),
**characterized in that** the foremilk storage volume (12) is connectable to the vacuum source (8) in order to displace fluid from the foremilk storage volume (12) by means of a vacuum.

12. Milking implement (1) according to claim 11, **characterized in that** the foremilk storage volume (12) is connected to the vacuum source (8) in order to displace fluid from the foremilk storage volume (12) by means of a vacuum.

13. Milking implement (1) according to claim 11 or 12, **characterized in that** the connection or at any rate at least a part of the connection (28) of the at least one teat cup (2) with the foremilk storage volume (12) is capable of being separated by means of a milk line valve at any rate at least liquid-tightly from one or a plurality of further connections or at any rate at least a part of a further connection or at any rate at least parts of a plurality of further connections (29) of the foremilk storage volume with the milking implement.

14. Milking implement (1) according to claim 13, **characterized in that** the milking implement (1) comprises a control unit that is designed to control the milk line valve (16).

15. Milking implement (1) according to any one of claims 11 to 14, which comprises a plurality of foremilk storage volumes (12), **characterized in that** the milking implement (1) comprises a connection (25) connected to the plurality of foremilk storage volumes (12) for discharging fluid.

16. Milking implement (1) according to claim 15, **characterized in that** the connection (25) debouches into a collecting element (26).

17. Milking implement (1) according to any one of claims 11 to 16, **characterized in that** the implement comprises a milking robot for automatically attaching and detaching, respectively, the at least one teat cup (2) to and from, respectively, the teats of the dairy animal to be milked.

## Patentansprüche

1. Verfahren zum Melken eines Milchtiers und Reinigen zumindest eines Teils eines Melkutensils (1) zum Melken des Milchtiers, wobei das Melkutensil (1) Folgendes umfasst:
- zumindest einen Zitzenbecher (2),
- ein Vormilchlagervolumen (12), das dazu ausgelegt ist, eine Fluidmenge wie Vormilch oder ein Reinigungsfluid zu enthalten,
- eine Verbindung (28) zwischen dem zumindest einen Zitzenbecher und dem Vormilchlagervolumen,
wobei das Verfahren die folgenden Schritte umfasst:
- Anbringen des zumindest einen Zitzenbechers (2) an einer Zitze des zu melkenden Milchtiers,
- jedenfalls zumindest Abziehen von Fluid, insbesondere Vormilch, mittels des zumindest einen Zitzenbechers (2),
- Sammeln jedenfalls zumindest einer Menge der abgezogenen Vormilch im Vormilchlagervolumen (12),
- Freigeben der Vormilchmenge derart, dass die Vormilch aus dem Vormilchlagervolumen (12) verdrängbar ist,
**dadurch gekennzeichnet, dass** das Verfahren auch den Schritt des Verdrängens von Fluid aus dem Vormilchlagervolumen (12) mittels eines Unterdrucks umfasst.

2. Verfahren nach Anspruch 1, **dadurch gekennzeichnet, dass** der Schritt des Abziehens von Fluid ein Schritt des Abziehens jedenfalls zumindest im Wesentlichen einer Flüssigkeit ist.

3. Verfahren nach Anspruch 2, **dadurch gekennzeichnet, dass** die Flüssigkeit Vormilch und/oder Reinigungsflüssigkeit umfasst.

4. Verfahren nach einem der vorhergehenden Ansprüche, **dadurch gekennzeichnet, dass** das Verfahren den Schritt des Leitens von Reinigungsfluid durch das Vormilchlagervolumen (12) umfasst.

5. Verfahren nach Anspruch 4, **dadurch gekennzeichnet, dass** das Reinigungsfluid eine Flüssigkeit, ein Gemisch aus Flüssigkeit und Gas oder Gas umfasst.

6. Verfahren nach Anspruch 4 oder 5, **dadurch gekennzeichnet, dass** der Schritt des Verdrängens von Fluid aus dem Vormilchlagervolumen mittels eines Unterdrucks und der Schritt des Leitens von Reinigungsfluid durch das Vormilchlagervolumen (12) zumindest praktisch gleichzeitig durchgeführt werden.

7. Verfahren nach einem der Ansprüche 4 bis 6, **dadurch gekennzeichnet, dass** der Schritt des Verdrängens von Fluid aus dem Vormilchlagervolumen (12) mittels eines Unterdrucks eine Zeitlang nach dem Beenden des Schritts des Leitens von Reinigungsfluid durch das Vormilchlagervolumen weitergeht.

8. Verfahren nach einem der vorhergehenden Ansprüche 4 bis 7, **dadurch gekennzeichnet, dass** der Schritt des Leitens von Reinigungsfluid durch das Vormilchlagervolumen (12) in die folgenden aufeinanderfolgenden Teilschritte unterteilt werden kann:
- Leiten einer Flüssigkeit oder eines Gemischs aus Flüssigkeit und Gas durch das Vormilchlagervolumen (12),
- Leiten eines Gases durch das Vormilchlagervolumen (12).

9. Verfahren nach einem der vorhergehenden Ansprüche, **dadurch gekennzeichnet, dass** der Schritt des Sammelns jedenfalls zumindest einer Menge der abgezogenen Vormilch im Vormilchlagervolumen (12) ein Schritt ist, bei dem die gesamte abgezogene Vormilch zumindest im Wesentlichen gesammelt wird.

10. Verfahren nach Anspruch 9, **dadurch gekennzeichnet, dass** der Schritt, bei dem die gesamte abgezogene Vormilch zumindest im Wesentlichen gesammelt wird, den Schritt umfasst, bei dem die Verbindung jedenfalls zumindest flüssigkeitsdicht getrennt wird, oder jedenfalls zumindest ein Teil der Verbindung (28) zwischen dem zumindest einen Zitzenbecher (2) und dem Vormilchlagervolumen (12) von einer oder mehreren weiteren Verbindungen oder jedenfalls zumindest ein Teil einer weiteren Verbindung oder jedenfalls zumindest Teile mehrerer weiterer Verbindungen (29) des Vormilchlagervolumens mit dem Melkutensil.

11. Melkutensil (1) zum Melken eines Milchtiers, umfassend
- zumindest einen Zitzenbecher (2),
- ein Vormilchlagervolumen (12), das dazu ausgelegt ist, eine Fluidmenge wie Vormilch oder ein Reinigungsfluid zu enthalten,
- eine Verbindung (28) zwischen dem zumindest einen Zitzenbecher (2) und dem Vormilchlagervolumen (12),
- eine Unterdruckquelle (8),
**dadurch gekennzeichnet, dass** das Vormilchlagervolumen (12) mit der Unterdruckquelle (8) verbunden werden kann, um Fluid mittels eines Unterdrucks aus dem Vormilchlagervolumen (12) zu verdrängen.

12. Melkutensil (1) nach Anspruch 11, **dadurch gekennzeichnet, dass** das Vormilchlagervolumen (12) mit der Unterdruckquelle (8) verbunden ist, um Fluid mittels eines Unterdrucks aus dem Vormilchlagervolumen (12) zu verdrängen.

13. Melkutensil (1) nach Anspruch 11 oder 12, **dadurch gekennzeichnet, dass** die Verbindung oder jedenfalls zumindest ein Teil der Verbindung (28) des zumindest einen Zitzenbechers (2) mit dem Vormilchlagervolumen (12) jedenfalls zumindest flüssigkeitsdicht mittels eines Milchleitungsventils von einer oder mehreren weiteren Verbindungen getrennt werden kann oder jedenfalls zumindest ein Teil einer weiteren Verbindung oder jedenfalls zumindest Teile mehrerer weiterer Verbindungen (29) des Vormilchlagervolumens mit dem Melkutensil.

14. Melkutensil (1) nach Anspruch 13, **dadurch gekennzeichnet, dass** das Melkutensil (1) eine Steuereinheit umfasst, die ausgelegt ist, das Milchleitungsventil (16) zu steuern.

15. Melkutensil (1) nach einem der Ansprüche 11 bis 14, das mehrere Vormilchlagervolumen (12) umfasst, **dadurch gekennzeichnet, dass** das Melkutensil (1) eine mit den mehreren Vormilchlagervolumen (12) verbundene Verbindung (25) zum Abführen von Fluid umfasst.

16. Melkutensil (1) nach Anspruch 15, **dadurch gekennzeichnet, dass** die Verbindung (25) in ein Sammelelement (26) mündet.

17. Melkutensil (1) nach einem der Ansprüche 11 bis 16, **dadurch gekennzeichnet, dass** das Utensil einen Melkroboter umfasst, um den zumindest einen Zitzenbecher (2) automatisch an den Zitzen des zu melkenden Milchtiers anzubringen bzw. von diesen zu lösen.

## Revendications

1. Méthode de traite d'un animal laitier et de nettoyage d'au moins une partie d'un équipement de traite (1) pour traire l'animal laitier, l'équipement de traite (1) comprenant :
- au moins un gobelet trayeur (2) ;
- un volume de stockage de premier lait (12) conçu pour contenir une quantité de fluide, comme du premier lait ou un fluide de nettoyage ;
- un raccord (28) entre l'au moins un gobelet trayeur et le volume de stockage de premier lait,
la méthode comprenant les étapes suivantes:
- attacher l'au moins un gobelet trayeur (2) à un trayon de l'animal laitier à traire ;
- dans chaque cas, au moins extraire du fluide, en particulier du premier lait au moyen de l'au moins un gobelet trayeur (2) ;
∘ recueillir, dans chaque cas, au moins une quantité du premier lait extrait dans le volume de stockage de premier lait (12) ;
- libérer la quantité de premier lait de telle manière que le premier lait puisse
être déplacé depuis le volume de stockage de premier lait (12), **caractérisée en ce que** la méthode comprend également l'étape consistant à déplacer du fluide depuis le volume de stockage de premier lait (12) au moyen de vide.

2. Méthode selon la revendication 1, **caractérisée en ce que** l'étape consistant à extraire du fluide est une étape d'extraction, dans chaque cas, au moins substantiellement d'un liquide.

3. Méthode selon la revendication 2, **caractérisée en ce que** le liquide comprend du premier lait et/ou un liquide de nettoyage.

4. Méthode selon l'une quelconque des revendications précédentes, **caractérisée en ce que** la méthode comprend l'étape consistant à amener du fluide de nettoyage à travers le volume de stockage de premier lait (12).

5. Méthode selon la revendication 4, **caractérisée en ce que** le fluide de nettoyage comprend un liquide, un mélange de liquide et de gaz ou un gaz.

6. Méthode selon la revendication 4 ou 5, **caractérisée en ce que** l'étape consistant à déplacer du fluide depuis le volume de stockage de premier lait au moyen de vide et l'étape consistant à amener du fluide de nettoyage à travers le volume de stockage de premier lait (12) sont effectuées au moins presque simultanément.

7. Méthode selon l'une quelconque des revendications 4 à 6, **caractérisée en ce que** l'étape consistant à déplacer du fluide depuis le volume de stockage de premier lait (12) au moyen de vide continue pendant un certain temps après la fin de l'étape consistant à amener du fluide de nettoyage à travers le volume de stockage de premier lait.

8. Méthode selon l'une quelconque des revendications précédentes 4 à 7, **caractérisée en ce que** l'étape consistant à amener du fluide de nettoyage à travers le volume de stockage de premier lait (12) peut être divisée en les sous-étapes successives suivantes :
- amener un liquide ou un mélange de liquide et de gaz à travers le volume de stockage de premier lait (12),
- amener un gaz à travers le volume de stockage de premier lait (12).

9. Méthode selon l'une quelconque des revendications précédentes, **caractérisée en ce que** l'étape consistant à recueillir, dans chaque cas, au moins une quantité du premier lait extrait dans le volume de stockage de premier lait (12) est une étape consistant à au moins substantiellement recueillir la totalité du premier lait extrait.

10. Méthode selon la revendication 9, **caractérisée en ce que** l'étape d'au moins substantiellement recueillir la totalité du premier lait extrait comprend l'étape consistant à, dans chaque cas, séparer au moins de manière étanche aux liquides le raccord ou, dans chaque cas, au moins une partie du raccord (28) entre l'au moins un gobelet trayeur (2) et le volume de stockage de premier lait (12) d'un ou d'une pluralité de raccords supplémentaires ou, dans chaque cas, au moins d'une partie d'un raccord supplémentaire ou, dans chaque cas, au moins de parties d'une pluralité de raccords supplémentaires (29) du volume de stockage de premier lait avec l'équipement de traite.

11. Équipement de traite (1) pour traire un animal laitier, comprenant
- au moins un gobelet trayeur (2) ;
- un volume de stockage du premier lait (12) qui est conçu pour contenir une quantité de fluide, comme du premier lait ou un fluide de nettoyage ;
- un raccord (28) entre l'au moins un gobelet trayeur (2) et le volume de
- stockage de premier lait (12),
- une source de vide (8),
**caractérisé en ce que** le volume de stockage de premier lait (12) peut être raccordé à la source de vide (8) afin de déplacer du fluide depuis le volume de stockage de premier lait (12) au moyen de vide.

12. Équipement de traite (1) selon la revendication 11, **caractérisé en ce que** le volume de stockage de premier lait (12) est raccordé à la source de vide (8) afin de déplacer du fluide depuis le volume de stockage de premier lait (12) au moyen de vide.

13. Équipement de traite (1) selon la revendication 11 ou 12, **caractérisé en ce que** le raccord ou, dans chaque cas, au moins une partie du raccord (28) de l'au moins un gobelet trayeur (2) avec le volume de stockage de premier lait (12) est apte à être séparé au moyen d'une soupape de conduite de lait, dans chaque cas, au moins de manière étanche aux liquides d'un ou d'une pluralité de raccords supplémentaires ou, dans chaque cas, au moins d'une partie d'un raccord supplémentaire ou, dans chaque cas, au moins de parties d'une pluralité de raccords supplémentaires (29) du volume de stockage de premier lait avec l'équipement de traite.

14. Équipement de traite (1) selon la revendication 13, **caractérisé en ce que** l'équipement de traite (1) comprend une unité de commande qui est conçue pour commander la soupape de conduite de lait (16).

15. Équipement de traite (1) selon l'une quelconque des revendications 11 à 14, comprenant une pluralité de volumes de stockage de premier lait (12), **caractérisé en ce que** l'équipement de traite (1) comprend un raccord (25) raccordé à la pluralité de volumes de stockage de premier lait (12) pour décharger du fluide.

16. Équipement de traite (1) selon la revendication 15, **caractérisé en ce que** le raccord (25) débouche dans un élément de collecte (26).

17. Équipement de traite (1) selon l'une quelconque des revendications 11 à 16, **caractérisé en ce que** l'équipement comprend un robot de traite pour automatiquement attacher et détacher respectivement l'au moins un gobelet trayeur (2) aux et des respectivement trayons de l'animal laitier à traire.
